# EUROPEAN PATENT APPLICATION

(11) **EP 4 401 226 A1**
(43) Date of publication of application: **17.07.2024**
(21) Application number: 22866146.8
(22) Date of filing: 20.05.2022
(51) Int. Cl.: H01M 50/40, H01M 10/0587

(54) **ELECTRODE ASSEMBLY, BATTERY CELL, BATTERY, AND ELECTRICAL DEVICE**

(30) Priority: 10.09.2021 CN 202111062600
(71) Applicant: Contemporary Amperex Technology Co., Limited, Ningde, Fujian 352100 (CN)
(72) Inventor: GUO, Suogang, Ningde, Fujian 352100 (CN); FU, Chenghua, Ningde, Fujian 352100 (CN); CHANG, Wen, Ningde, Fujian 352100 (CN); YE, Yonghuang, Ningde, Fujian 352100 (CN)
(74) Representative: Gong, Jinping
(86) International application number: PCT/CN2022/094253
(87) International publication number: WO 2023/035668

(57) **Abstract**

Provided are an electrode assembly (10), a battery cell (6), a battery (2), and an electric apparatus. The electrode assembly (10) comprises a positive electrode plate (11), a negative electrode plate (12), and a separation assembly (13), and the separation assembly (13) is configured to separate the positive electrode plate (11) from the negative electrode plate (12). At least part of the separation assembly (13) is provided as a multi-layer structure area (13a), and at least part of the multi-layer structure area (13a) is located between the positive electrode plate (11) and negative electrode plate (12) adjacent to each other. The multi-layer structure area (13a) is configured to correspond to a position where the negative electrode plate (12) is prone to lithium precipitation. The multi-layer structure area (13a) can block lithium dendrites, thereby reducing the probability of conduction between the positive electrode plate (11) and the negative electrode plate (12), effectively reducing the risk of short circuiting, prolonging the service life of the electrode assembly (10), and improving the safety of the electrode assembly (10).

## Description

### CROSS-REFERENCE TO RELATED APPLICATIONS

This application claims priority to Chinese Patent Application No. 202111062600.7, entitled "ELECTRODE ASSEMBLY AND RELATED BATTERY CELL, BATTERY, APPARATUS, AND MANUFACTURING METHOD", filed on September 10, 2021, which is hereby incorporated by reference in its entirety.

### TECHNICAL FIELD

The present application relates to the technical field of batteries, and in particular, to an electrode assembly, a battery cell, a battery, and an electric apparatus.

### BACKGROUND

Battery cells are widely used in electronic devices such as a mobile phone, a notebook computer, an electric power cart, an electric vehicle, an electric airplane, an electric ship, an electric toy car, an electric toy ship, an electric toy airplane, and a power tool. The battery cells may include nickel-cadmium battery cells, nickelhydrogen battery cells, lithium-ion battery cells, secondary alkaline zinc-manganese battery cells, and the like.

In the development of battery technologies, how to improve the safety of the battery cells is a research direction in the battery technologies.

### SUMMARY

The present application provides an electrode assembly, a battery cell, a battery, and an electric apparatus, which can improve the safety.

In a first aspect, an embodiment of the present application provides an electrode assembly, including a positive electrode plate, a negative electrode plate, and a separation assembly, the separation assembly being configured to separate the positive electrode plate from the negative electrode plate. At least part of the separation assembly is provided as a multi-layer structure area, at least part of the multi-layer structure area being located between the positive electrode plate and the negative electrode plate adjacent to each other.

In the above technical solution, the multi-layer structure area is configured to correspond to a position where the negative electrode plate is prone to lithium precipitation. The multi-layer structure area can block lithium dendrites, thereby reducing the probability of conduction between the positive electrode plate and the negative electrode plate, effectively reducing the risk of short circuiting, prolonging the service life of the electrode assembly, and improving safety of the electrode assembly.

In some embodiments, the positive electrode plate, the separation assembly, and the negative electrode plate are wound to form a bending region, and at least part of the multi-layer structure area is disposed in the bending region.

The bending region is prone to lithium precipitation. In the above technical solution, at least part of the multi-layer structure area is disposed in the bending region, so that, even if lithium precipitation occurs in the bending region, the multi-layer structure area can also block lithium dendrites, which reduces the probability of conduction between the positive electrode plate and the negative electrode plate, effectively reduces the risk of short circuiting, prolongs the service life of the electrode assembly, and improves the safety of the electrode assembly.

In some embodiments, at least part of the multi-layer structure area is disposed adjacently to a first bending portion of the positive electrode plate.

Curvature of the first bending portion of the positive electrode plate is relatively large. During charging, the negative electrode plate adjacent to the first bending portion of the positive electrode plate is more prone to lithium precipitation. In the above technical solution, at least part of the multi-layer structure area is disposed adjacently to the first bending portion of the positive electrode plate, to reduce a risk of conduction between the first bending portion of the positive electrode plate and the lithium dendrites and improve safety of the battery cell.

In some embodiments, two sides of the first bending portion of the positive electrode plate are both provided as the multi-layer structure area, and a number of layers of the multi-layer structure area located on an inner side of the first bending portion of the positive electrode plate is greater than or equal to a number of layers of the multi-layer structure area located on an outer side of the first bending portion of the positive electrode plate, to reduce the risk of conduction between the first bending portion of the positive electrode plate and the lithium dendrites and improve the safety of the battery cell.

In some embodiments, at least part of the multi-layer structure area is disposed adjacently to a second bending portion of the positive electrode plate.

Curvature of the second bending portion of the positive electrode plate is relatively large. During charging, the negative electrode plate adjacent to the second bending portion of the positive electrode plate is more prone to lithium precipitation. In the above technical solution, at least part of the multi-layer structure area is disposed adjacently to the second bending portion of the positive electrode plate, to reduce a risk of conduction between the second bending portion of the positive electrode plate and the lithium dendrites and improve the safety of the battery cell.

In some embodiments, the number of layers of the multi-layer structure area located on the inner side of the first bending portion of the positive electrode plate is greater than or equal to a number of layers of the multi-layer structure area located on an inner side of the second bending portion of the positive electrode plate, to reduce the risk of conduction between the first bending portion of the positive electrode plate and the lithium dendrites and improve the safety of the battery cell.

In some embodiments, part of the separation assembly is provided as a single-layer structure area, and the single-layer structure area and the multi-layer structure area are arranged along a winding direction; at least part of the single-layer structure area being located between the positive electrode plate and the negative electrode plate adjacent to each other.

In the above technical solution, the single-layer structure area is configured to correspond to a position where the negative electrode plate is not prone to lithium precipitation. The single-layer structure area has fewer layers, which can reduce the amount of the separation assembly and increase energy density of the battery cell.

In some embodiments, the positive electrode plate, the separation assembly, and the negative electrode plate are wound to further form a flat region, the flat region being connected to the bending region. At least part of the single-layer structure area is disposed in the flat region.

In the above technical solution, compared with the bending region, the negative electrode plate in the flat region is not prone to lithium precipitation. Therefore, even if the single-layer structure area is disposed in the flat region, insulation between the positive and negative electrode plates can also be improved, and the risk of short circuiting is reduced. The single-layer structure area is small in size, which can increase energy density of the electrode assembly.

In some embodiments, an end portion of the multi-layer structure area along the winding direction is located in the flat region.

In some embodiments, a plurality of multi-layer structure areas and a plurality of single-layer structure areas are provided, the plurality of multi-layer structure areas and the plurality of single-layer structure areas being alternately arranged along the winding direction.

In the above technical solution, the plurality of multi-layer structure areas may correspond to a plurality of bending portions of the positive electrode plate respectively, to reduce the risk of short circuiting in the plurality of bending portions of the positive electrode plate and improve the safety.

In some embodiments, numbers of layers of the plurality of multi-layer structure areas gradually decrease from inside out along the winding direction.

In the above technical solution, increasing the number of layers in the multi-layer structure area in a region with a high short-circuiting risk and reducing the number of layers in the multi-layer structure area in a region with a low short-circuiting risk can improve the safety and save the amount of the separation assembly.

In some embodiments, in the winding direction, the multi-layer structure area is entirely located on a side of the single-layer structure area close to a winding starting end of the separation assembly. The multi-layer structure area can pass through the bending portion in the innermost circle of the positive electrode plate, reducing the risk of short circuiting and improving the safety.

In some embodiments, at least part of the multi-layer structure area is disposed adjacently to a final bending portion of the positive electrode plate, to reduce a risk of conduction between the final bending portion of the positive electrode plate and the lithium dendrites and improve the safety of the battery cell.

In some embodiments, the separation assembly includes a first separation layer and a second separation layer, the first separation layer being configured to insulate and separate the positive electrode plate from the negative electrode plate, at least part of the second separation layer being located between the positive electrode plate and the negative electrode plate and stacked with the first separation layer. A region of the first separation layer overlapping with the second separation layer and the second separation layer form the multi-layer structure area of the separation assembly.

In the above technical solution, an additional second separation layer is added to the electrode assembly to form a multi-layer structure area on the separation assembly, thereby reducing the risk of short circuiting caused by lithium precipitation and improving the safety.

In some embodiments, a number of layers of the second separation layer ranges from 1 to 10 in the multi-layer structure area.

In some embodiments, a thickness of the second separation layer is less than or equal to a thickness of the first separation layer.

In the above technical solution, the first separation layer and the second separation layer can play a function of multi-layer protection, so the added second separation layer can have a thickness no greater than that of the first separation layer to reduce the amount of the second separation layer.

In some embodiments, the thickness of the first separation layer ranges from 2 µm to 30 µm, and the thickness of the second separation layer ranges from 1 µm to 25 µm.

In some embodiments, the first separation layer includes a first base film and an insulating layer applied to a surface of the first base film, the second separation layer includes a second base film, and the insulating layer is not applied to a surface of the second base film.

In the above technical solution, the second separation layer mainly plays a role of separating the lithium dendrites from the positive electrode plate, the electrode assembly has lower requirements on other properties of the second separation layer, and the second separation layer may not be provided with the insulating layer, thereby simplifying the structure of the second separation layer, saving the cost, and increasing the energy density.

In some embodiments, a thickness of the second base film is greater than a thickness of the first base film. The second base film with a larger thickness can effectively separate the lithium dendrites from the positive electrode plate, improving the safety.

In some embodiments, at least part of the second separation layer is separated from the first separation layer in a stacking direction of the first separation layer and the second separation layer.

When the first separation layer is extruded by a lithium layer to stretch, a portion of the second separation layer separated from the first separation layer is less affected by the first separation layer, and the second separation layer is less stretched, leading to a lower risk of defects. Therefore, according to the above technical solution, a risk of the lithium dendrites passing through the first separation layer and the second separation layer can be effectively reduced, thereby improving the safety.

In some embodiments, the positive electrode plate, the separation assembly, and the negative electrode plate are wound to form a bending region and a flat region, the flat region being connected to the bending region. One part of the second separation layer is located in the bending region, and the other part of the second separation layer is located in the flat region. In the bending region, the second separation layer is separated from the first separation layer; and in the flat region, the second separation layer is attached to the first separation layer.

In the above technical solution, the risk of lithium precipitation is higher in the bending region, and the separation of the second separation layer from the first separation layer in the bending region can effectively reduce the risk of the lithium dendrites passing through the first separation layer and the second separation layer, thereby improving the safety. In the flat region, the second separation layer is attached to the first separation layer, which can reduce a movement range of the second separation layer along the winding direction and reduce a risk of dislocation of the second separation layer.

In some embodiments, porosity of the second separation layer is less than porosity of the first separation layer.

In the above technical solution, since the second separation layer has smaller porosity, after the lithium dendrites pass through the first separation layer, it is not easy for the lithium dendrites to pass through micropores in the second separation layer, thereby reducing a risk of conduction between the lithium dendrites and the positive electrode plate and improving the safety.

In some embodiments, the second separation layer has a porous structure, and a pore size of a pore in the second separation layer is less than or equal to 1 µm.

In the above technical solution, the pore size of the pore of the second separation layer is smaller, and it is not easy for the lithium dendrites to pass through, thereby reducing the risk of conduction between the lithium dendrites and the positive electrode plate and improving the safety.

In some embodiments, an elongation rate of the second separation layer along the winding direction is greater than an elongation rate of the first separation layer along the winding direction.

In the above technical solution, the second separation layer may have a larger elongation rate, so that the second separation layer is not prone to defects during the stretching when extruded by the lithium layer, thereby reducing a risk of the lithium dendrites passing through the second separation layer and improving the safety.

In some embodiments, the second separation layer is formed by folding an end portion of the first separation layer.

In the above technical solution, the second separation layer extends directly from the end portion of the first separation layer, without adding and fixing the second separation layer separately, which makes the winding process more convenient and integrity of the electrode assembly better.

In some embodiments, the positive electrode plate, the separation assembly, and the negative electrode plate are wound, the electrode assembly includes a starting segment along the winding direction, and the end portion of the first separation layer is located at the starting segment.

In the above technical solution, the second separation layer can extend from the starting segment along the winding direction and pass through the first bending portion of the positive electrode plate, which can reduce the risk of the lithium dendrites passing through the first separation layer and the second separation layer at the same time and contact with the first bending portion of the positive electrode plate, improve the safety, and reduce a length of the second separation layer required to be extended, thereby saving the amount and reducing the cost.

In some embodiments, the positive electrode plate, the separation assembly, and the negative electrode plate are wound to form a bending region, the bending region includes a first bending part close to the starting segment along the winding direction, the first bending part being provided with the first separation layer and the second separation layer, and the second separation layer extends from the end portion of the first separation layer and beyond the first bending part.

At the first bending part, bending curvature of the positive electrode plate and the negative electrode plate is maximum, and a risk of lithium precipitation on the negative electrode plate is the highest during charging. In the above technical solution, the second separation layer extends beyond the first bending part, the first separation layer and the second separation layer can at least protect the first bending part most prone to lithium precipitation, and at the same time, the use of the second separation layer can be saved, thereby improving the safety of the electrode assembly and prolonging the service life of the electrode assembly while saving the cost.

In some embodiments, the positive electrode plate, the separation assembly, and the negative electrode plate are wound to form a bending region. The bending region includes a plurality of bending parts arranged along the winding direction, the electrode assembly includes a plurality of second separation layers, and the first separation layer and the plurality of second separation layers are arranged at at least one of the plurality of bending parts.

In the above technical solution, the arrangement of the second separation layers at some or all positions in the plurality of bending parts can effectively reduce the risk of short circuiting at the bending parts and improve the safety.

In some embodiments, the plurality of second separation layers are arranged apart along the winding direction. Portions of the first separation layer overlapping with the plurality of second separation layers and the plurality of second separation layers form a plurality of multi-layer structure areas.

In the above technical solution, the second separation layer can be arranged more flexibly, that is, the second separation layer can be arbitrarily arranged at a position where a number of separation layers is required to be increased, and at the same time, a waste caused by addition of the second separation layer at a position where the number of separation layers is not required to be increased can also be reduced, thereby increasing the energy density.

In some embodiments, the electrode assembly includes a starting segment along the winding direction. The plurality of bending parts include a first bending part and a second bending part, the first bending part being closer to the starting segment than the second bending part along the winding direction. The thickness of the second separation layer arranged at the first bending part is greater than the thickness of the second separation layer arranged at the second bending part, so as to strengthen protection at the first bending part which is more prone to short circuiting, improve the safety, and save the amount of the second separation layer.

In some embodiments, the first separation layer includes two surfaces along a thickness direction thereof, and the plurality of second separation layers are located on a same surface of the first separation layer, so that the second separation layer can less affect a distance between the positive electrode plate and the negative electrode plate when the first separation layer is tensioned, thereby reducing the risk of lithium precipitation and improving the safety.

In some embodiments, the plurality of second separation layers are bonded to the surface of the first separation layer, which can reduce a risk of position offset of the second separation layer in a charge-discharge process of the electrode assembly, and ensure a separation effect of the second separation layer.

In a second aspect, an embodiment of the present application provides a battery cell, including a housing and the electrode assembly according to any one of the embodiments in the first aspect, the electrode assembly being accommodated in the housing.

In a third aspect, an embodiment of the present application provides a battery, including a plurality of battery cells in the second aspect.

In a fourth aspect, an embodiment of the present application provides an electric apparatus, including the battery cell in the second aspect, the battery cell being configured to provide electric energy.

### BRIEF DESCRIPTION OF THE DRAWINGS

In order to more clearly illustrate the technical solutions in embodiments of the present application, the accompanying drawings used in the description of the embodiments of the present application will be briefly introduced below. It is apparent that, the accompanying drawings in the following description are only some embodiments of the present application, and other drawings can be obtained by those of ordinary skill in the art from the provided drawings without creative efforts.
Fig. 1 is a schematic structural diagram of a vehicle according to some embodiments of the present application;
Fig. 2 is a schematic exploded view of a battery according to some embodiments of the present application;
Fig. 3 is a schematic exploded view of a battery cell according to some embodiments of the present application;
Fig. 4 is a schematic structural diagram of an electrode assembly according to some embodiments of the present application;
Fig. 5 is a partial enlarged schematic view of the electrode assembly shown in Fig. 4;
Fig. 6 is a schematic structural diagram of the electrode assembly shown in Fig. 4 prior to winding;
Fig. 7 is a schematic structural diagram of a separation assembly shown in Fig. 6;
Fig. 8 is a schematic structural diagram of an electrode assembly according to some other embodiments of the present application;
Fig. 9 is a partial schematic view of the electrode assembly shown in Fig. 8;
Fig. 10 is a schematic structural diagram of the electrode assembly shown in Fig. 8 prior to winding;
Fig. 11 is a schematic structural diagram of an electrode assembly prior to winding according to some other embodiments of the present application; and
Fig. 12 is a schematic structural diagram of an electrode assembly according to some other embodiments of the present application.

### Reference numerals:

1. vehicle; 2. battery; 3. controller; 4. motor; 5. box; 5a. first box portion; 5b. second box portion; 5c. accommodation space; 6. battery cell; 10. electrode assembly; 100. starting segment; 20. housing; 21. case; 22. end cover; 30. electrode terminal; 11. positive electrode plate; 111. first bending portion; 112. second bending portion; 113. final bending portion; 12. negative electrode plate; 13. separation assembly; 131. first separation layer; 131a. first base film; 131b. insulating layer; 132. second separation layer; 132a. second base film; 13a. multi-layer structure area; 13b. single-layer structure area; 13c. winding starting end; A. flat region; B. bending region; B1. first bending part; B2 second bending part; W winding direction.

### DETAILED DESCRIPTION

In order to make the objectives, technical solutions, and advantages of the embodiments of the present application clearer, the technical solutions in the embodiments of the present application will be described clearly and completely below with reference to the accompanying drawings in the embodiments of the present application. Apparently, the described embodiments are merely some of rather than all of the embodiments of the present application. All other embodiments acquired by those skilled in the art without creative efforts based on the embodiments of the present application shall fall within the protection scope of the present application.

Unless defined otherwise, all technical and scientific terms used herein have the same meanings as would generally understood by those skilled in the technical field of the present application. The terms used herein in the specification of the present application are for the purpose of describing specific embodiments only, and are not intended to limit the present application. The terms "comprise/include" and "have" in the specification and claims of the present application and the description of the above accompanying drawings and any variations thereof are intended to cover non-exclusive inclusion. The terms "first", "second", and the like in the specification and claims of the present application or the above accompanying drawings are used to distinguish different objects, but not to describe a specific sequence or primary-subordinate relationship.

In the description of the present application, it should be understood that the orientation or position relationships indicated by the terms "center", "transverse", "length", "width", "upper", "lower", "front", "back", "left", "right", "vertical", "horizontal", "top", "bottom", "inner", "outer", "axial", "radial", "circumferential", and the like are based on the orientation or position relationships shown in the accompanying drawings and are intended to facilitate the description of the present application and simplify the description only, rather than indicating or implying that the apparatus or element referred to must have a particular orientation or be constructed and operated in a particular orientation, and therefore are not to be interpreted as limiting the present application.

In the description of the present application, it should be noted that, unless otherwise specifically stated and limited, the terms "mounting," "joining," "connection", and "attachment" should be understood in a broad sense, such as, a fixed connection, a detachable connection, or an integral connection; a direct connection, an indirect connection through an intermediate medium, or an internal connection of two elements. For those of ordinary skill in the art, the specific meanings of the foregoing terms in the present application can be understood according to specific circumstances.

Reference to an "embodiment" herein means that a specific feature, structure or characteristic described in conjunction with an embodiment may be included in at least one embodiment of the present application. The phrase shown in various locations in the specification may not necessarily refer to a same embodiment, and is not an independent or optional embodiment exclusive of another embodiment. It is explicitly and implicitly understood by those skilled in the art that the embodiments described herein may be combined with another embodiment.

The term "and/or" herein is merely used to describe an associated relationship between associated objects and means three relationships. For example, A and/or B may mean A alone, A and B together, and B alone. In addition, the character "/" herein generally indicates that the associated objects are in an "or" relationship.

In the present application, "a plurality of" refers to more than two (including two). Similarly, "a plurality of groups" refers to more than two groups (including two groups), and "a plurality of pieces" refers to more than two pieces (including two pieces).

In the present application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, and the like, which is not limited in the embodiments of the present application. The battery cell may be in a cylindrical shape, a flat shape, a cuboidal shape, or other shapes, which is not limited in the embodiments of the present application. Depending on a form of packaging, the battery cell is typically classified into three types: a cylindrical battery cell, a prismatic battery cell, and a pouch-type battery cell, which is not limited in the embodiments of the present application.

The battery cell includes an electrode assembly and an electrolyte. The electrode assembly includes a positive electrode plate, a negative electrode plate, and a separator. The battery cell operates primarily by relying on movement of metal ions between the positive electrode plate and the negative electrode plate. The positive electrode plate includes a positive current collector and a positive active material layer. The positive active material layer is applied to a surface of the positive current collector. A part that is of the positive current collector and that is not coated with the positive active material layer protrudes from a part that is of the positive current collector and that is coated with the positive active material layer. The part that is of the positive current collector and that is not coated with the positive active material layer serves as a positive tab. Taking a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. The negative active material layer is applied to a surface of the negative current collector. A part that is of the negative current collector and that is not coated with the negative active material layer protrudes from a part that is of the negative current collector and that is coated with the negative active material layer. The part that is of the negative current collector and that is not coated with the negative active material layer serves as a negative tab. The negative current collector may be made of copper, and a negative active material may be carbon, silicon, or the like. In order to ensure passage of a large current without fusing, a plurality of positive tabs are provided and are stacked together, and a plurality of negative tabs are provided and are stacked together. The separator may be made of polypropylene (PP), polyethylene (PE), or the like. The electrode assembly may have a wound structure or a laminated structure, but the embodiments of the present application are not limited thereto. The development of the battery technology is required to consider many design factors, such as energy density, a cycle life, a discharge capacity, a charge-discharge rate, and other performance parameters. In addition, the safety of the battery should also be considered.

The battery mentioned in various embodiments of the present application means a stand-alone physical module that includes one or more battery cells to provide a higher voltage and a higher capacity. For example, the battery mentioned in the present application may include a battery module, a battery pack, or the like. The battery typically includes a box configured to package one or more battery cells. The box can prevent liquid or other foreign matters from affecting the charging or discharging of the battery cell.

The separator has electronic insulation, which is disposed between the positive electrode plate and the negative electrode plate and has a main function of preventing short circuiting inside the electrode assembly caused by contact between the positive electrode plate and the negative electrode plate. The separator has a large number of through micropores, which can ensure free passage of electrolyte ions. In particular, the separator has good permeability to lithium ions. Exemplarily, the separator may include a separation base layer and a functional layer on a surface of the separation base layer. The separation base layer may be at least one of PP, PE, an ethylenepropylene copolymer, polybutylene terephthalate, and the like. The functional layer may be a mixture layer of a ceramic oxide and a binder.

The separator plays a very important role in the electrode assembly, which may directly lead to a reduction in short circuiting, performance, and service life of the electrode assembly.

When the battery cell is charged, the metal ions are deintercalated from the positive active material layer and intercalated into the negative active material layer, but some exceptions may occur, resulting in precipitation of the metal ions. Taking a lithium-ion battery cell as an example, there is not enough space for lithium to be intercalated into the negative active material layer, the lithium ions are intercalated into the negative active material layer with excessive resistance or the lithium ions are deintercalated from the positive active material layer too quickly, and the deintercalated lithium ions cannot be intercalated into the negative active material layer of the negative electrode plate in an equal amount. The lithium ions that cannot be intercalated into the negative electrode plate can only gain electrons from a surface of the negative electrode plate, thereby forming metallic lithium, which is called lithium precipitation. Lithium precipitation not only degrades performance of the battery cell and greatly shortens a cycle life, but also limits a fast charging capacity of the battery cell. In addition, when lithium precipitation occurs in the battery cell, precipitated lithium metal is very active and can react with an electrolytic solution at a relatively low temperature, resulting in a decrease in a starting temperature (Tonset) of self-heating and an increase in a self-heating speed of the battery cell, thereby severely impairing the safety of the battery cell. Moreover, in the case of severe lithium precipitation, the deintercalated lithium ions may form a lithium layer on the surface of the negative electrode plate. The lithium layer may cause the risk of short circuiting between the positive electrode plate and the negative electrode plate adjacent to each other, leading to potential safety hazards.

After intensive research, the inventor has found that short circuiting is due to lithium dendrites in the lithium layer passing through the separator. Specifically, after the lithium layer is precipitated on the surface of the negative electrode plate, the lithium layer may extrude the separator between the positive and negative electrode plates, and the separator may be stretched under the extrusion of the lithium layer. The separator has a porous structure. When the separator is stretched by a force, pore sizes of local micropores of the separator may become larger, thereby forming a defect region on the separator. If the defect region of the separator is opposite to the lithium layer, smaller lithium dendrites in the lithium layer may pass through larger pores in the defect region, resulting in contact between the lithium dendrites and the positive electrode plate, causing short circuiting.

In view of this, the inventor of the present application proposes an electrode assembly, including a positive electrode plate, a negative electrode plate, and a separation assembly. The separation assembly is configured to separate the positive electrode plate from the negative electrode plate. At least part of the separation assembly is provided as a multi-layer structure area. At least part of the multi-layer structure area is located between the positive electrode plate and the negative electrode plate adjacent to each other. The multi-layer structure area of the separation assembly can reduce the risk of short circuiting between the positive and negative electrode plates, prolong the service life, and improve the safety.

For ease of description, the following embodiments are illustrated with a vehicle as an electric apparatus.

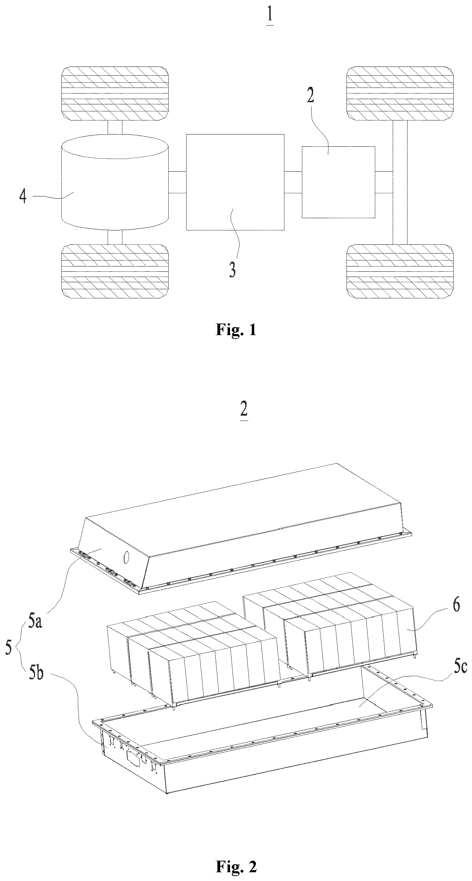

Fig. 1 is a schematic structural diagram of a vehicle according to some embodiments of the present application. As shown in Fig. 1, a battery 2 is disposed inside the vehicle 1. The battery 2 may be disposed at the bottom, front or rear of the vehicle 1. The battery 2 may be configured to supply power to the vehicle 1. For example, the battery 2 may serve as an operating power supply of the vehicle 1.

The vehicle 1 may further include a controller 3 and a motor 4. The controller 3 is configured to control the battery 2 to supply power to the motor 4 to be used for, for example, operating power requirements during start-up, navigation, and running of the vehicle 1.

In some embodiments of the present application, the battery 2 may not only serve as the operating power supply of the vehicle 1, but also serve as a driving power supply of the vehicle 1, so as to provide driving power for the vehicle 1 in place of or partially in place of oil or natural gas.

Fig. 2 is a schematic exploded view of a battery according to some embodiments of the present application. As shown in Fig. 2, the battery 2 includes a box 5 and a battery cell 6. The battery cell 6 is accommodated in the box 5.

The box 5 is configured to accommodate the battery cell 6. The box 5 may have various structures. In some embodiments, the box 5 may include a first box portion 5a and a second box portion 5b. The first box portion 5a and the second box portion 5b cover each other. The first box portion 5a and the second box portion 5b jointly define an accommodation space 5c configured to accommodate the battery cell 6. The second box portion 5b may have a hollow structure with one end open, and the first box portion 5a has a plate-like structure. The first box portion 5a covers an open side of the second box portion 5b to form the box 5 provided with the accommodation space 5c. Alternatively, the first box portion 5a and the second box portion 5b may each have a hollow structure with one side open, and the open side of the first box portion 5a covers the open side of the second box portion 5b to form the box 5 provided with the accommodation space 5c. Certainly, the first box portion 5a and the second box portion 5b may be in various shapes, such as a cylinder or a cuboid.

To improve airtightness between the first box portion 5a and the second box portion 5b that are connected, a sealing element such as a sealant or a seal ring may be disposed between the first box portion 5a and the second box portion 5b.

Assuming that the first box portion 5a covers the top of the second box portion 5b, the first box portion 5a may also be referred to as an upper box cover, and the second box portion 5b may also be referred to as a lower box.

A plurality of battery cells 6 may be provided in the battery 2. The plurality of battery cells 6 may be connected in series, in parallel, or in a hybrid manner. The hybrid manner means that the plurality of battery cells 6 are connected in series and in parallel. The plurality of battery cells 6 may be directly connected in series, in parallel, or in a hybrid manner, and then an entirety formed by the plurality of battery cells 6 is accommodated in the box 5. Of course, the plurality of battery cells 6 may alternatively be connected in series, in parallel, or in a hybrid manner first to form a battery module, and then a plurality of battery modules are connected in series, in parallel, or in a hybrid manner to form an entirety to be accommodated in the box 5.

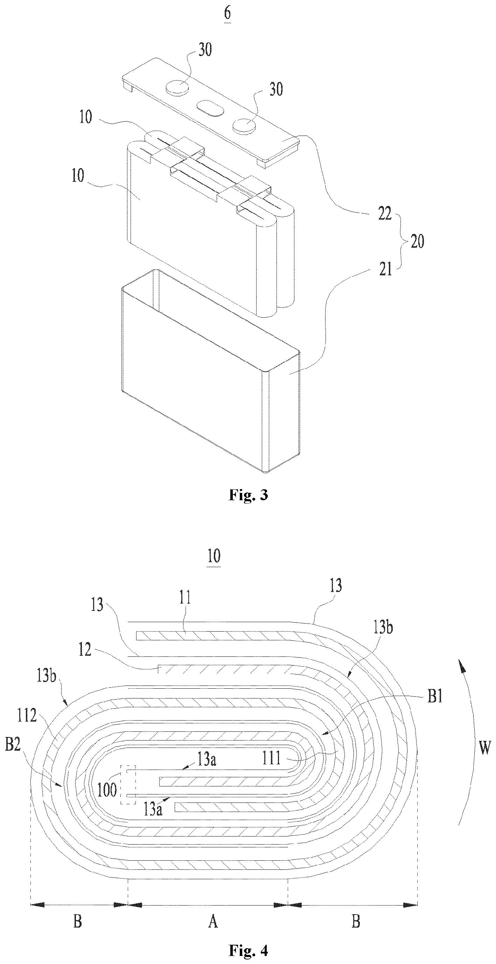

Fig. 3 is a schematic exploded view of a battery cell according to some embodiments of the present application.

The battery cell 6 refers to a minimum unit constituting the battery 2. As shown in Fig. 3, the battery cell 6 includes a housing 20, an electrode assembly 10, and other functional components. The electrode assembly 10 is accommodated in the housing 20.

In some embodiments, the housing 20 includes an end cover 22 and a case 21.

The end cover 22 refers to a component that covers an opening of the case 21 to separate an internal environment of the battery cell 6 from an external environment. Without limitation, a shape of the end cover 22 may be adapted to a shape of the case 21 to fit the case 21. Optionally, the end cover 22 may be made of a material (such as aluminum alloy) with certain hardness and strength. In this way, the end cover 22 is not prone to deformation when extruded and collided, so that the battery cell 6 can have higher structural strength and safety performance can also be improved. Functional components such an electrode terminal 30 may be provided on the end cover 22. The electrode terminal 30 may be configured for electrical connection with the electrode assembly 10 to output or input electric energy of the battery cell 6.

In some embodiments, the end cover 22 may also be provided with a pressure relief mechanism for releasing internal pressure when the internal pressure or a temperature of the battery cell 6 reaches a threshold. The material of the end cover 22 may also be various, such as copper, iron, aluminum, stainless steel, aluminum alloy, or plastic, which is not particularly limited in the embodiments of the present application.

In some embodiments, an insulating member may also be provided on an inner side of the end cover 22, and the insulating member may be configured to separate electrical connection components in the case 21 from the end cover 22, so as to reduce the risk of short circuiting. Exemplarily, the insulating member may be plastic, rubber, or the like.

The case 21 is an assembly configured to cooperate with the end cover 22 to form the internal environment of the battery cell 6. The formed internal environment may be configured to accommodate the electrode assembly 10, the electrolytic solution, and other components. The case 21 and the end cover 22 may be independent components. An opening may be provided on the case 21, and the end cover 22 covers the opening at the opening to form the internal environment of the battery cell 6. Without limitation, the end cover 22 and the case 21 may alternatively be integrated. Specifically, the end cover 22 and the case 21 may first form a common connection surface before other components are put in the case, and when the interior of the case 21 is required to be sealed, the end cover 22 covers the case 21. The case 21 may have various shapes and sizes, such as a cuboid, a cylinder, a hexagonal prism, and the like. Specifically, the shape of the case 21 may be determined according to a specific shape and size of the electrode assembly 10. The material of the case 21 may be various, such as copper, iron, aluminum, stainless steel, aluminum alloy, or plastic, which is not particularly limited in the embodiments of the present application.

The electrode assembly 10 is a component in the battery cell 6 and soaked in the electrolytic solution to undergo an electrochemical reaction. The case 21 may include one or more electrode assemblies 10. The electrode assembly 10 is mainly formed by winding the positive electrode plate and the negative electrode plate, and a separator is generally provided between the positive electrode plate and the negative electrode plate. Portions of the positive electrode plate and the negative electrode plate with an active material constitute a main body portion of the electrode assembly 10, and portions of the positive electrode plate and the negative electrode plate without the active material constitute tabs respectively. The positive tab and the negative tab may be located at one end of the main body portion together or at two ends of the main body portion respectively. In a charge-discharge process of the battery cell 6, the positive active material and the negative active material react with the electrolytic solution, and the tab is connected to the electrode terminal 30 to form a current loop.

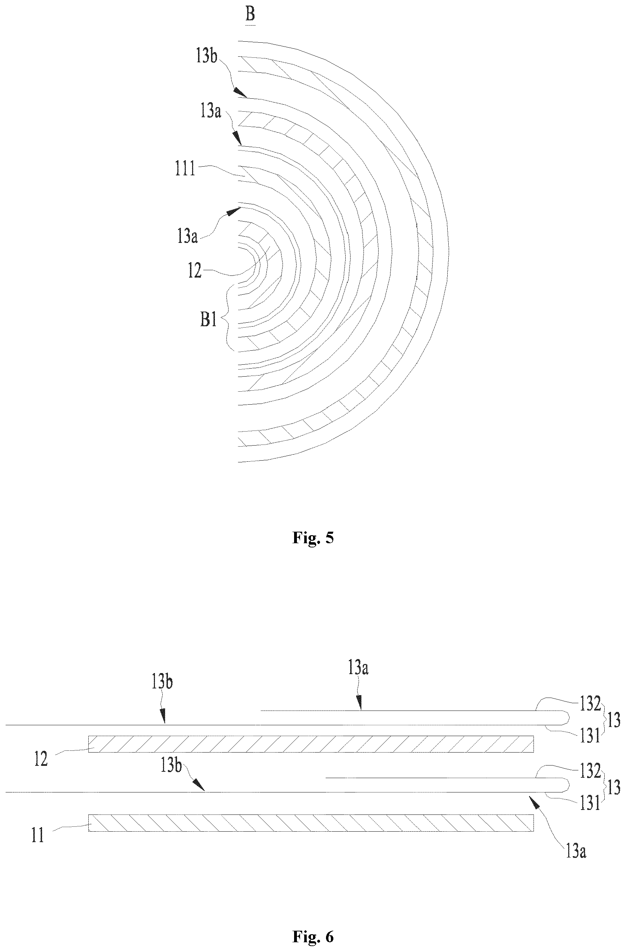

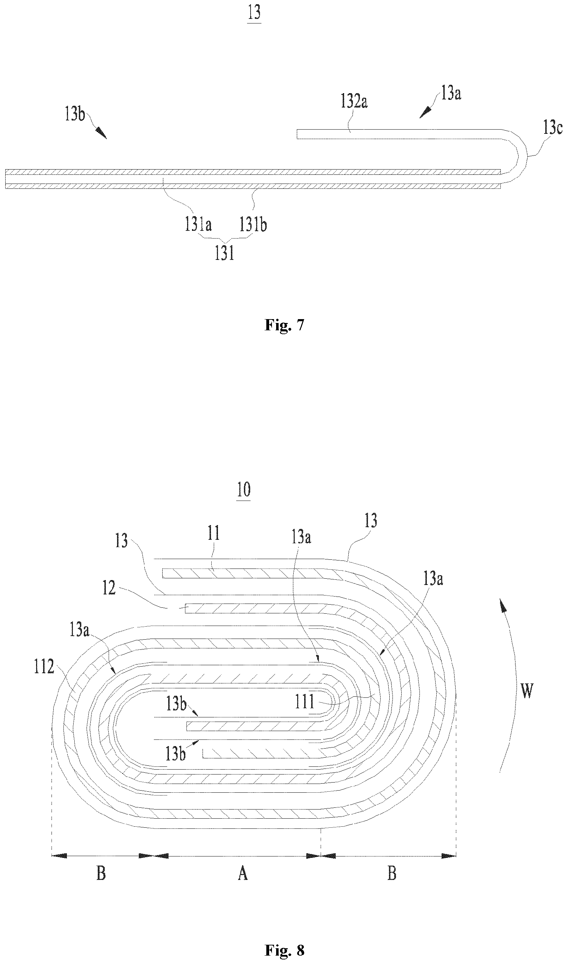

Fig. 4 is a schematic structural diagram of an electrode assembly according to some embodiments of the present application; Fig. 5 is a partial enlarged schematic view of the electrode assembly shown in Fig. 4; Fig. 6 is a schematic structural diagram of the electrode assembly shown in Fig. 4 prior to winding; and Fig. 7 is a schematic structural diagram of a separation assembly shown in Fig. 6.

As shown in Fig. 4 to Fig. 7, the electrode assembly 10 according to the embodiments of the present application includes a positive electrode plate 11, a negative electrode plate 12, and a separation assembly 13. The separation assembly 13 is configured to separate the positive electrode plate 11 from the negative electrode plate 12. At least part of the separation assembly 13 is disposed as a multi-layer structure area 13a. At least part of the multi-layer structure area 13a is located between the positive electrode plate 11 and the negative electrode plate 12 adjacent to each other.

The electrode assembly 10 may have various shapes. For example, the electrode assembly 10 may be a cylinder, a flat body, a prism (e.g., a triangular prism, a quadrangular prism or a hexagonal prism) or other shapes.

One or more separation assemblies 13 may be provided. Exemplarily, two separation assemblies 13 are provided. In the present application, one separation assembly 13, the negative electrode plate 12, the other separation assembly 13 and the positive electrode plate 11 may be sequentially stacked and wound for more than two circles to form a wound structure. When a plurality of separation assemblies 13 are provided, only one separation assembly 13 may be provided with the multi-layer structure area 13a, or each separation assembly 13 may be provided with the multi-layer structure area 13a.

The separation assembly 13 is an assembly including an insulating film, and is configured to separate the positive electrode plate 11 from the negative electrode plate 12. This insulating film has a large number of through micropores, which can ensure free passage of metal ions. Exemplarily, the insulating film has good permeability to lithium ions and basically cannot block the passage of the lithium ions.

The separation assembly 13 may be made of one insulating film or a plurality of insulating films.

The multi-layer structure area 13a is a region that is of the separation assembly 13 and that has a multi-layer structure. Exemplarily, a region where a plurality of separation layers of the separation assembly 13 are stacked together forms the multi-layer structure area 13a, and a stacking direction of the plurality of separation layers is parallel to a stacking direction of the positive electrode plate 11 and the negative electrode plate 12. In the multi-layer structure area 13a, two adjacent separation layers may be connected to each other or separated from each other.

A number of layers of the multi-layer structure area 13a is greater than or equal to 2. Exemplarily, the number of layers of the multi-layer structure area 13a may range from 2 to 15.

The separation assembly 13 may be wholly the multi-layer structure area 13a or partially the multi-layer structure area 13a. Exemplarily, only part of the separation assembly 13 is the multi-layer structure area 13a. In other words, part of the separation assembly 13 is provided as a single-layer structure area 13b.

One or more multi-layer structure areas 13a may be provided. Exemplarily, a plurality of multi-layer structure areas 13a are provided, and adjacent multi-layer structure areas 13a are connected through the single-layer structure area 13b.

The multi-layer structure areas 13a may be wholly located between the positive electrode plate 11 and the negative electrode plate 12 or only partially located between the positive electrode plate 11 and the negative electrode plate 12.

The multi-layer structure area 13a is configured to correspond to a position where the negative electrode plate 12 is prone to lithium precipitation. The multi-layer structure area 13a can block lithium dendrites, thereby reducing the probability of conduction between the positive electrode plate 11 and the negative electrode plate 12, effectively reducing the risk of short circuiting, prolonging the service life of the electrode assembly 10, and improving the safety of the electrode assembly 10.

Specifically, after the lithium layer is precipitated on the surface of the negative electrode plate 12, the lithium layer may extrude the separation layer of the multi-layer structure area 13a close to the negative electrode plate 12, and the separation layer close to the negative electrode plate 12 is stretched under the extrusion of the lithium layer. When local micropores in the separation layer close to the negative electrode plate 12 become larger in pore size and form a defect region, smaller lithium dendrites in the lithium layer may pass through the defect region. The separation layer of the multi-layer structure area 13a away from the negative electrode plate 12 may insulate and separate the lithium dendrites passing through the defect region from the positive electrode plate 11, thereby reducing a risk of contact between the lithium dendrites and the positive electrode plate 11 and improving the safety.

The separation layer of the multi-layer structure area 13a away from the negative electrode plate 12 is at a relatively large distance from the lithium layer, is subjected to a relatively small extrusion force of the lithium layer, and is at a lower risk of stretching under the extrusion force and generating a defect region. A position where the separation layer generates the defect region during the stretching is indeterminate. Even if the separation layer away from the negative electrode plate 12 also generates a defect region, there is a small possibility that the defect region of the separation layer away from the negative electrode plate 12 is just opposite to the defect region of the separation layer close to the negative electrode plate 12, and it is more difficult for the lithium dendrites to pass through the multi-layer structure area 13a at the same time. Therefore, in the embodiments of the present application, the arrangement of the multi-layer structure area 13a can effectively reduce the risk of short circuiting and improve the safety.

In some embodiments, the positive electrode plate 11, the separation assembly 13, and the negative electrode plate 12 are wound to form a bending region B, and at least part of the multi-layer structure area 13a is disposed in the bending region B.

A winding direction W is a direction in which the positive electrode plate 11, the negative electrode plate 12, and the separation assembly 13 are circumferentially wound from inside out. Exemplarily, in the figure, the winding direction W is a counterclockwise direction.

The bending region B is a region with a bending structure in the electrode assembly 10. In the bending region B, the positive electrode plate 11, the negative electrode plate 12, and the separation assembly 13 all bend. Exemplarily, a portion of the positive electrode plate 11 located in the bending region B generally bends into an arc shape, and a portion of the negative electrode plate 12 located in the bending region B generally bends into an arc shape.

A winding device winds the positive electrode plate 11, the negative electrode plate 12, and the separation assembly 13 into several circles, and each circle may be constructed with several layers. One circle means starting from a certain point on the electrode assembly 10, which is considered as a starting end, running along the winding direction W by one turn, and reaching another certain point that is taken as a finishing end. The finishing end, the starting end, and a center of the circle are on one straight line, and the starting end is between the finishing end and the center of the circle.

The electrode assembly 10 may be wholly the bending region B or only partially the bending region B. Exemplarily, the electrode assembly includes a flat region A and a bending region B. The bending region B is connected to the flat region A. The flat region A is a region with a flat structure in the electrode assembly 10.

The multi-layer structure area 13a may be wholly arranged in the bending region B or only partially arranged in the bending region B.

The positive electrode plate 11 and the negative electrode plate 12 located in the bending region B are required to bend, while the positive active material layer and the negative active material layer are prone to stress concentration during the bending and cause shedding of respective active materials. The shedding of active materials, especially the shedding of the active material from the negative electrode plate 12, may cause lithium intercalation potential of the negative active material layer of the negative electrode plate 12 to be less than an amount of lithium ions that can be supplied by the positive active material layer of the positive electrode plate 11 adjacent thereto, thereby causing lithium precipitation. In the embodiments of the present application, at least part of the multi-layer structure area 13a is disposed in the bending region B, so that, even if lithium precipitation occurs in the bending region B, the multi-layer structure area 13a can also block lithium dendrites, which reduces the probability of conduction between the positive electrode plate 11 and the negative electrode plate 12, effectively reduces the risk of short circuiting, prolongs the service life of the electrode assembly 10, and improves the safety of the electrode assembly 10.

In some embodiments, at least part of the multi-layer structure area 13a is disposed adjacently to a first bending portion 111 of the positive electrode plate 11.

"The multi-layer structure area 13a is adjacent to a first bending portion 111 of the positive electrode plate 11" means that the negative electrode plate 12 is not arranged between the multi-layer structure area 13a and the first bending portion 111 of the positive electrode plate 11.

The first bending portion 111 of the positive electrode plate 11 is a portion where the positive electrode plate 11 bends for the first time during the winding along the winding direction W. Exemplarily, the first bending portion 111 of the positive electrode plate 11 is generally in a shape of an arc.

The multi-layer structure area 13a adjacent to the first bending portion 111 of the positive electrode plate 11 may be arranged on an inner side of the first bending portion 111 of the positive electrode plate 11 or arranged on an outer side of the first bending portion 111 of the positive electrode plate 11.

Curvature of the first bending portion 111 of the positive electrode plate 11 is relatively large. During charging, the negative electrode plate 12 adjacent to the first bending portion 111 of the positive electrode plate 11 is more prone to lithium precipitation. In this embodiment, at least part of the multi-layer structure area 13a is disposed adjacently to the first bending portion 111 of the positive electrode plate 11, to reduce a risk of conduction between the first bending portion 111 of the positive electrode plate 11 and the lithium dendrites and improve safety of the battery cell 6.

In some embodiments, two sides of the first bending portion 111 of the positive electrode plate 11 are both provided as the multi-layer structure area 13a, and a number of layers of the multi-layer structure area 13a located on the inner side of the first bending portion 111 of the positive electrode plate 11 is greater than or equal to a number of layers of the multi-layer structure area 13a located on the outer side of the first bending portion 111 of the positive electrode plate 11.

The multi-layer structure areas 13a on the two sides of the first bending portion 111 of the positive electrode plate 11 may belong to a same separation assembly 13 or belong to two different separation assemblies 13 respectively.

Curvature of the negative electrode plate 12 located on the inner side of the first bending portion 111 of the positive electrode plate 11 is greater than curvature of the negative electrode plate 12 located on the outer side of the first bending portion 111 of the positive electrode plate 11. The negative electrode plate 12 located on the inner side of the first bending portion 111 of the positive electrode plate 11 is more prone to lithium precipitation. In this embodiment, the number of layers of the multi-layer structure area 13a located on the inner side of the first bending portion 111 of the positive electrode plate 11 is no less than the number of layers of the multi-layer structure area 13a located on the outer side of the first bending portion 111 of the positive electrode plate 11, so as to reduce the risk of conduction between the first bending portion 111 of the positive electrode plate 11 and the lithium dendrites and improve the safety of the battery cell 6.

In some embodiments, the number of layers of the multi-layer structure area 13a located on the inner side of the first bending portion 111 of the positive electrode plate 11 is greater than the number of layers of the multi-layer structure area 13a located on the outer side of the first bending portion 111 of the positive electrode plate 11.

In some embodiments, at least part of the multi-layer structure area 13a is disposed adjacently to a second bending portion 112 of the positive electrode plate 11.

"The multi-layer structure area 13a is adjacent to a second bending portion 112 of the positive electrode plate 11" means that the negative electrode plate 12 is not arranged between the multi-layer structure area 13a and the second bending portion 112 of the positive electrode plate 11.

The second bending portion 112 of the positive electrode plate 11 is a portion where the positive electrode plate 11 bends for the second time during the winding along the winding direction W. Exemplarily, the second bending portion 112 of the positive electrode plate 11 is generally in a shape of an arc.

The multi-layer structure area 13a adjacent to the second bending portion 112 of the positive electrode plate 11 may be arranged on an inner side of the second bending portion 112 of the positive electrode plate 11 or arranged on an outer side of the second bending portion 112 of the positive electrode plate 11.

The multi-layer structure area 13a adjacent to the second bending portion 112 of the positive electrode plate 11 and the multi-layer structure area 13a adjacent to the first bending portion 111 of the positive electrode plate 11 may be integrally connected or may be arranged apart along the winding direction W.

Curvature of the second bending portion 112 of the positive electrode plate 11 is relatively large. During charging, the negative electrode plate 12 adjacent to the second bending portion 112 of the positive electrode plate 11 is prone to lithium precipitation. In this embodiment, at least part of the multi-layer structure area 13a is disposed adjacently to the second bending portion 112 of the positive electrode plate 11, to reduce a risk of conduction between the second bending portion 112 of the positive electrode plate 11 and the lithium dendrites and improve the safety of the battery cell 6.

In some embodiments, the number of layers of the multi-layer structure area 13a located on the inner side of the first bending portion 111 of the positive electrode plate 11 is greater than or equal to the number of layers of the multi-layer structure area 13a located on the inner side of the second bending portion 112 of the positive electrode plate 11.

Curvature of the negative electrode plate 12 located on the inner side of the first bending portion 111 of the positive electrode plate 11 is greater than curvature of the negative electrode plate 12 located on the inner side of the second bending portion 112 of the positive electrode plate 11. The negative electrode plate 12 located on the inner side of the first bending portion 111 of the positive electrode plate 11 is more prone to lithium precipitation. In this embodiment, the number of layers of the multi-layer structure area 13a located on the inner side of the first bending portion 111 of the positive electrode plate 11 is no less than the number of layers of the multi-layer structure area 13a located on the inner side of the second bending portion 112 of the positive electrode plate 11, to reduce the risk of conduction between the first bending portion 111 of the positive electrode plate 11 and the lithium dendrites and improve the safety of the battery cell 6.

In some embodiments, the number of layers of the multi-layer structure area 13a located on the inner side of the first bending portion 111 of the positive electrode plate 11 is equal to the number of layers of the multi-layer structure area 13a located on the inner side of the second bending portion 112 of the positive electrode plate 11.

In some embodiments, part of the separation assembly 13 is provided as a single-layer structure area 13b, and the single-layer structure area 13b and the multi-layer structure area 13a are arranged along the winding direction W. At least part of the single-layer structure area 13b is located between the positive electrode plate 11 and the negative electrode plate 12 adjacent to each other.

The single-layer structure area 13b is a region with a single-layer structure in the separation assembly 13. One or more single-layer structure areas 13b may be provided. Exemplarily, a plurality of single-layer structure areas 13b and a plurality of multi-layer structure areas 13a are provided, and the plurality of single-layer structure areas 13b and the plurality of multi-layer structure areas 13a are alternately arranged along the winding direction W.

The single-layer structure area 13b is configured to correspond to a position where the negative electrode plate 12 is not prone to lithium precipitation. The single-layer structure area 13b has fewer layers, which can reduce the amount of the separation assembly 13 and increase energy density of the battery cell 6.

In some embodiments, a total thickness of the multi-layer structure area 13a is greater than a thickness of the single-layer structure area 13b.

In some embodiments, the positive electrode plate 11, the separation assembly 13, and the negative electrode plate 12 are wound to further form a flat region A, and the flat region A is connected to the bending region B. At least part of the single-layer structure area 13b is disposed in the flat region A.

The flat region A is a region with a flat structure in the electrode assembly 10. Portions of the positive electrode plate 11 and the negative electrode plate 12 located in the flat region A are basically flat. Exemplarily, a surface of each layer of the positive electrode plate and a surface of each layer of the negative electrode plate located in the flat region A are basically planar.

The positive electrode plate 11 and the negative electrode plate 12 located in the flat region A are both in a flat state, the active material in the flat region A is not easy to shed, and the negative electrode plate 12 in the flat region A is not prone to lithium precipitation. Therefore, even if the single-layer structure area 13b is disposed in the flat region A, insulation between the positive and negative electrode plates can also be improved, thereby reducing the risk of short circuiting.

In some embodiments, two bending regions B are provided, and the two bending regions B are respectively arranged at two ends of the flat region A.

In some embodiments, an end portion of the multi-layer structure area 13a along the winding direction W is located in the flat region A.

In some examples, the multi-layer structure area 13a along the winding direction W has one end located in the flat region A and the other end located in the bending region B.

In another example, two ends of the multi-layer structure area 13a along the winding direction W are both located in the flat region A. In this way, the multi-layer structure area 13a can wholly pass through the bending region B, thereby reducing the risk of short circuiting in the bending region B.

In some embodiments, in the winding direction W, the multi-layer structure area 13a is entirely located on a side of the single-layer structure area 13b close to a winding starting end 13c of the separation assembly 13.

The winding starting end 13c of the separation assembly 13 is an innermost end of the separation assembly 13 along the winding direction W. One multi-layer structure area 13a and one single-layer structure area 13b are provided.

The multi-layer structure area 13a is close to the winding starting end 13c of the separation assembly 13. With the arrangement, the multi-layer structure area 13a can pass through the bending portion in the innermost circle of the positive electrode plate 11, reducing the risk of short circuiting and improving the safety.

In some embodiments, the separation assembly 13 includes a first separation layer 131 and a second separation layer 132, the first separation layer 131 is configured to insulate and separate the positive electrode plate 11 from the negative electrode plate 12, and at least part of the second separation layer 132 is located between the positive electrode plate 11 and the negative electrode plate 12 and stacked with the first separation layer 131. A region of the first separation layer 131 overlapping with the second separation layer 132 and the second separation layer 132 form the multi-layer structure area 13a of the separation assembly 13.

Exemplarily, the first separation layer 131 may be understood as a separation layer between the positive electrode plate 11 and the negative electrode plate 12 in the related art, that is, a basic separation layer, and the second separation layer 132 may be understood as an extra separation layer, that is, an additional separation layer.

One or more second separation layers 132 may be provided in the separation assembly 13.

The first separation layer 131 and the second separation layer 132 may be two parts of an integrated member, or two independent members provided separately.

The first separation layer 131 and the second separation layer 132 may be made of a same material or different materials.

In this embodiment, a thickness of the first separation layer 131 and a thickness of the second separation layer 132 are not limited. The thickness of the first separation layer 131 may be greater than, equal to, or less than the thickness of the second separation layer 132.

The first separation layer 131 and the second separation layer 132 are stacked between the positive electrode plate 11 and the negative electrode plate 12. The second separation layer 132 may be arranged independently on the first separation layer 131. That is, in a stacking direction of the first separation layer 131 and the second separation layer 132, there is no connection relationship such as adhesion between a surface of the second separation layer 132 facing the first separation layer 131 and the first separation layer 131. Certainly, the second separation layer 132 may alternatively be attached to a surface of the first separation layer 131. Exemplarily, the second separation layer 132 may be wholly attached to the first separation layer 131 or only partially attached to the first separation layer 131. "Attach" refers to an attached connection.

In the embodiments of the present application, an additional second separation layer 132 is added to the electrode assembly 10 to form a multi-layer structure area 13a on the separation assembly 13, thereby reducing the risk of short circuiting caused by lithium precipitation and improving the safety.

In some embodiments, a number of layers of the second separation layer 132 ranges from 1 to 10 in the multi-layer structure area 13a. Exemplarily, the number of layers of the second separation layer 132 is 1, 2, 3, 5, or 10 in the multi-layer structure area 13a. When a plurality of second separation layers 132 are arranged in one multi-layer structure area 13a, dimensions of the plurality of second separation layers 132 along the winding direction may be the same or different.

In some embodiments, the separation assembly 13 is provided with a plurality of multi-layer structure areas 13a, and numbers of layers of the second separation layers 132 of the plurality of multi-layer structure areas 13a may be the same or different.

In some embodiments, the thickness of the second separation layer 132 is less than or equal to the thickness of the first separation layer 131.

The first separation layer 131 and the second separation layer 132 can play a function of multi-layer protection, so the added second separation layer 132 can have a thickness no greater than that of the first separation layer 131 to reduce the amount of the second separation layer 132.

Optionally, the thickness of the second separation layer 132 is less than the thickness of the first separation layer 131.

In some embodiments, the second separation layer 132 is disposed on a side of the first separation layer 131 facing the positive electrode plate 11.

In some embodiments, the thickness of the first separation layer 131 ranges from 2 µm to 30 µm. Optionally, the thickness of the first separation layer 131 is 2 µm, 5 µm, 7 µm, 10 µm, 15 µm, 20 µm, or 30 µm.

In some embodiments, the thickness of the second separation layer 132 ranges from 1 µm to 25 µm. Optionally, the thickness of the second separation layer 132 is 1 µm, 2 µm, 5 µm, 7 µm, 10 µm, 15 µm, 20 µm, or 25 µm.

In some embodiments, porosity of the second separation layer 132 is less than porosity of the first separation layer 131. Since the second separation layer 132 has smaller porosity, after the lithium dendrites pass through the first separation layer 131, it is not easy for the lithium dendrites to pass through micropores in the second separation layer 132, thereby reducing a risk of conduction between the lithium dendrites and the positive electrode plate 11 and improving the safety.

In some embodiments, the second separation layer 132 has a porous structure, and a pore size of a pore in the second separation layer 132 is less than or equal to 1 µm.

The pore size of the pore in the second separation layer 132 is smaller, and it is not easy for the lithium dendrites to pass through, thereby reducing the risk of conduction between the lithium dendrites and the positive electrode plate 11 and improving the safety.

In some embodiments, an elongation rate of the first separation layer 131 along the winding direction W ranges from 30% to 1000%, and an elongation rate of the second separation layer 132 along the winding direction W ranges from 30% to 1000%.

In some embodiments, the elongation rate of the second separation layer 132 along the winding direction W is greater than the elongation rate of the first separation layer 131 along the winding direction W.

The second separation layer 132 may have a larger elongation rate, so that the second separation layer 132 is not prone to defects during the stretching when extruded by the lithium layer, thereby reducing a risk of the lithium dendrites passing through the second separation layer 132 and improving the safety.

In some embodiments, an elongation rate of the first separation layer 131 131 along an axial direction ranges from 30% to 1000%, an elongation rate of the second separation layer 132 along the axial direction ranges from 30% to 1000%, and the axial direction is perpendicular to the winding direction W.

In some embodiments, tensile strength of the first separation layer 131 and the second separation layer 132 along the winding direction W ranges from 500 kgf/cm² to 10000 kgf/cm², and tensile strength of the first separation layer 131 and the second separation layer 132 along the axial direction ranges from 500 kgf/cm² to 10000 kgf/cm².

In some embodiments, kept at 105°C for one hour, the first separation layer 131 and the second separation layer 132 have shrinkage rates ranging from 0.01% to 50% along the winding direction W, and the first separation layer 131 and the second separation layer 132 have shrinkage rates ranging from 0.01% to 50% along the axial direction.

In some embodiments, needling strength of the first separation layer 131 is greater than or equal to 80 gf, and needling strength of the second separation layer 132 is greater than or equal to 80 gf.

In some embodiments, surface density of the first separation layer 131 ranges from 30 mg/10000 mm² to 100 mg/10000 mm². Surface density of the second separation layer 132 ranges from 30 mg/10000 mm² to 100 mg/10000 mm².

In some embodiments, air permeability of the first separation layer 131 ranges from 10 sec/100 cc to 1000 sec/100 cc, and air permeability of the second separation layer 132 ranges from 10 sec/100 cc to 1000 sec/100 cc.

In some embodiments, the first separation layer 131 includes a first base film 131a and an insulating layer 131b applied to a surface of the first base film 131a, the second separation layer 132 includes a second base film 132a, and the insulating layer 131b is not applied to a surface of the second base film 132a.

The first base film 131a and the second base film 132a are porous thin films. The first base film 131a and the second base film 132a may be a same film layer or different film layers. Exemplarily, the base film is made of a polymer material electrically insulating and having liquid retention energy, such as PP, PE, or polyvinylidene fluoride (PVDF).

The insulating layer 131b is a functional layer disposed on the surface of the first base film 131a. Exemplarily, the insulating layer 131b includes an inorganic material, a polymer binder, and a dispersant. The inorganic material may include at least one of boehmite and silica. The polymer binder may include at least one of PVDF and polystyrene-acrylate. The dispersant may include polyvinyl alcohol. The inorganic material may clamp the base film to reduce shrinkage of the base film. The polymer binder may be bonded to the electrode plate to increase overall rigidity of the electrode assembly 10.

The first base film 131a and the second base film 132a may be integrally formed or separated.

Thicknesses of the first base film 131a and the second base film 132a are not limited in the embodiments of the present application.

In the embodiments of the present application, the number of layers of the multi-layer structure area 13a is determined according to a number of layers of the base film. In other words, the number of layers of the multi-layer structure area 13a refers to the number of layers of the base film in the multi-layer structure area 13a.

The second separation layer 132 mainly plays a role of separating the lithium dendrites from the positive electrode plate 11, the electrode assembly 10 has lower requirements on other properties of the second separation layer 132, and the second separation layer 132 may not be provided with the insulating layer 131b, thereby simplifying the structure of the second separation layer 132, saving the cost, and increasing the energy density.

In some embodiments, a thickness of the insulating layer 131b ranges from 0.5 µm to 10 µm. A particle size of the inorganic material ranges from 0.1 µm to 10 µm. In the insulating layer 131b, content of the inorganic material ranges from 70% to 98%; content of the polymer binder ranges from 1% to 20%; and content of the dispersant ranges from 0.5% to 10%.

In some embodiments, a thickness of the second base film 132a is greater than a thickness of the first base film 131a. The second base film 132a with a larger thickness can effectively separate the lithium dendrites from the positive electrode plate 11, improving the safety.

In some embodiments, at least part of the second separation layer 132 is separated from the first separation layer 131 in a stacking direction of the first separation layer 131 and the second separation layer 132.

There is no connection relationship such as adhesion between at least part of the second separation layer 132 and the first separation layer 131.

When the first separation layer 131 (or the second separation layer 132) is extruded by the lithium layer to stretch, a portion of the second separation layer 132 separated from the first separation layer 131 is less affected by the first separation layer 131, and the second separation layer 132 is less stretched, leading to a lower risk of defects. Therefore, in this embodiment, a risk of the lithium dendrites passing through the first separation layer 131 and the second separation layer 132 can be effectively reduced, thereby improving the safety.

In some embodiments, the positive electrode plate 11, the separation assembly 13, and the negative electrode plate 12 are wound to form a bending region B and a flat region A, and the flat region A is connected to the bending region B. One part of the second separation layer 132 is located in the bending region B, and the other part of the second separation layer 132 is located in the flat region A. In the bending region B, the second separation layer 132 is separated from the first separation layer 131. In the flat region A, the second separation layer 132 is attached to the first separation layer 131.

The risk of lithium precipitation is higher in the bending region B, and the separation of the second separation layer 132 from the first separation layer 131 in the bending region B can effectively reduce the risk of the lithium dendrites passing through the first separation layer 131 and the second separation layer 132, thereby improving the safety. In the flat region A, the second separation layer 132 is attached to the first separation layer 131, which can reduce a movement range of the second separation layer 132 along the winding direction W and reduce a risk of dislocation of the second separation layer 132.

In some embodiments, the second separation layer 132 is formed by folding an end portion of the first separation layer 131.

Exemplarily, the end portion of the first separation layer 131 is folded to form the second separation layer 132, and a fold is a boundary between the first separation layer 131 and the second separation layer 132.

In this embodiment, the second separation layer 132 extends directly from the end portion of the first separation layer 131, without adding and fixing the second separation layer 132 separately, which makes the winding process more convenient and integrity of the electrode assembly 10 better.

In some embodiments, the positive electrode plate 11, the separation assembly 13, and the negative electrode plate 12 are wound, the electrode assembly 10 includes a starting segment 100 along the winding direction W, and the end portion of the first separation layer 131 is located at the starting segment 100.

The starting segment 100 along the winding direction W refers to an end portion of the electrode assembly 10 in the innermost circle.

The second separation layer 132 can extend from the starting segment 100 along the winding direction W and pass through the first bending portion 111 of the positive electrode plate 11, which can reduce the risk of the lithium dendrites passing through the first separation layer 131 and the second separation layer 132 at the same time and contact with the first bending portion 111 of the positive electrode plate 11, and improve the safety. At the same time, in this embodiment, a length of the second separation layer 132 required to be extended can also be reduced, thereby saving the amount and reducing the cost.

In some embodiments, the positive electrode plate 11, the separation assembly 13, and the negative electrode plate 12 are wound to form a bending region B, the bending region B includes a first bending part B1 close to the starting segment 100 along the winding direction W, the first bending part B1 is provided with the first separation layer 131 and the second separation layer 132, and the second separation layer 132 extends from the end portion of the first separation layer 131 and beyond the first bending part B1.

The first bending part B1 is a position where the electrode assembly 10 bends for the first time in a winding and forming process. Exemplarily, at the first bending part B1, the positive electrode plate 11 bends for the first time, and the negative electrode plate 12 bends for the first time.

At the first bending part B1, bending curvature of the positive electrode plate 11 and the negative electrode plate 12 is maximum, and a risk of lithium precipitation on the negative electrode plate 12 is the highest during charging. The second separation layer 132 extends beyond the first bending part B1, the first separation layer 131 and the second separation layer 132 can at least protect the first bending part B1 most prone to lithium precipitation, and at the same time, the use of the second separation layer 132 can be saved, thereby improving the safety of the electrode assembly 10 and prolonging the service life of the electrode assembly 10 while saving the cost.

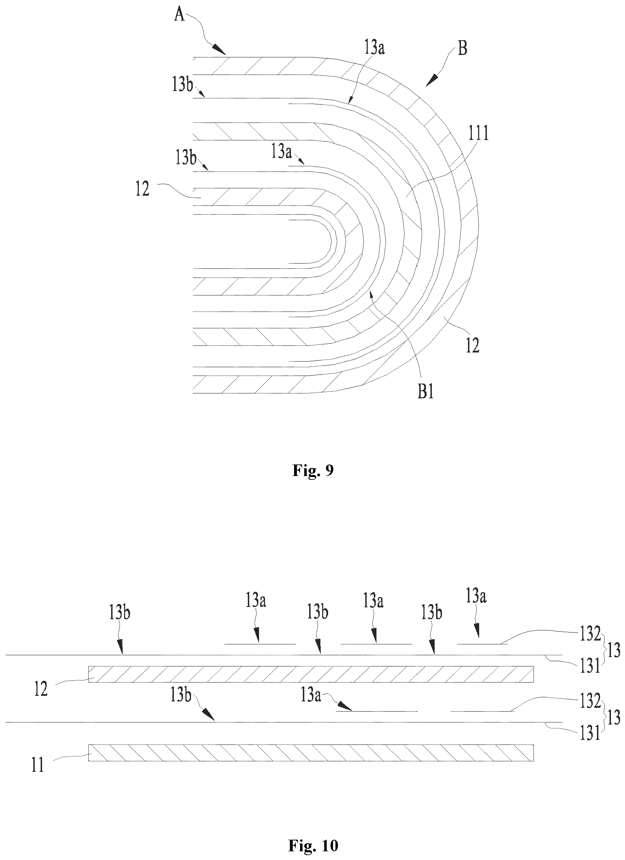

Fig. 8 is a schematic structural diagram of an electrode assembly according to some other embodiments of the present application; Fig. 9 is a partial schematic view of the electrode assembly shown in Fig. 8; and Fig. 10 is a schematic structural diagram of the electrode assembly shown in Fig. 8 prior to winding.

As shown in Fig. 8 to Fig. 10, in some embodiments, a plurality of multi-layer structure areas 13a and a plurality of single-layer structure areas 13b are provided, and the plurality of multi-layer structure areas 13a and the plurality of single-layer structure areas 13b are alternately arranged along the winding direction W.

The plurality of multi-layer structure areas 13a may correspond to a plurality of bending portions of the positive electrode plate 11 respectively, to reduce the risk of short circuiting in the plurality of bending portions of the positive electrode plate 11 and improve the safety.

Each multi-layer structure area 13a includes one or more second separation layers 132. Numbers of layers of the plurality of multi-layer structure areas 13a may be the same or different.

In some embodiments, each multi-layer structure area 13a may separate one bending portion of the positive electrode plate 11 from the negative electrode plate 12.

In some embodiments, two ends of each multi-layer structure area 13a along the winding direction W are located in the flat region A.

In some embodiments, the positive electrode plate 11, the separation assembly 13, and the negative electrode plate 12 are wound to form a bending region B. The bending region B includes a plurality of bending parts arranged along a winding direction W, the electrode assembly 10 includes a plurality of second separation layers 132, and the first separation layer 131 and the plurality of second separation layers 132 are arranged at at least one of the plurality of bending parts.

The bending part is a position where the electrode assembly 10 bends in the winding and forming process. Exemplarily, the plurality of bending parts include a first bending part B 1 and a second bending part B2. At the first bending part B 1, both the positive electrode plate 11 and the negative electrode plate 12 bend for the first time, and at the second bending part B2, both the positive electrode plate 11 and the negative electrode plate 12 bend for the second time.

In this embodiment, the arrangement of the second separation layers 132 at some or all positions in the plurality of bending parts can effectively reduce the risk of short circuiting at the bending parts and improve the safety.

It is to be noted that one second separation layer 132 may be arranged to extend through the plurality of bending parts or each second separation layer 132 may be arranged to extend through one bending part.

In some embodiments, the plurality of second separation layers 132 are arranged apart along the winding direction W.

"The plurality of second separation layers 132 are arranged apart" may be understood as that the plurality of second separation layers 132 are not connected to form an entire second separation layer 132 but are separated. In this embodiment, the second separation layer 132 can be arranged more flexibly, that is, the second separation layer 132 can be arbitrarily arranged at a position where a number of separation layers is required to be increased, and at the same time, a waste caused by addition of the second separation layer 132 at a position where the number of separation layers is not required to be increased can also be reduced, thereby increasing the energy density.

In some embodiments, the electrode assembly 10 includes a starting segment 100 along the winding direction W. The plurality of bending parts include a first bending part B 1 and a second bending part B2, and the first bending part B 1 is closer to the starting segment 100 than the second bending part B2 along the winding direction W. The thickness of the second separation layer 132 arranged at the first bending part B 1 is greater than the thickness of the second separation layer 132 arranged at the second bending part B2.

The negative electrode plate 12 at the first bending part B 1 is at a higher risk of lithium precipitation than the negative electrode plate 12 at the second bending part B2, and a risk of the lithium dendrites passing through the second separation layer 132 at the first bending part B1 is higher than a risk of the lithium dendrites passing through the second separation layer 132 at the second bending part B2. Therefore, in this embodiment, the thickness of the second separation layer 132 arranged at the first bending part B1 is greater than the thickness of the second separation layer 132 arranged at the second bending part B2 so as to strengthen protection at the first bending part B1 that is more prone to short circuiting, improve the safety, and save the amount of the second separation layer 132.

In some embodiments, the plurality of second separation layers 132 are bonded to the surface of the first separation layer 131, which can reduce a risk of position offset of the second separation layer 132 in a charge-discharge process of the electrode assembly 10, and ensure a separation effect of the second separation layer 132.

Optionally, two ends of the second separation layer 132 along the winding direction W are bonded to the first separation layer 131, and a middle part of the second separation layer 132 along the winding direction W is separated from the first separation layer 131.

In some embodiments, after the electrode assembly 10 is wound and formed, the electrode assembly 10 is hot-pressed from the outside, so that the second separation layer 132 is bonded to the first separation layer 131.

In some embodiments, the first separation layer 131 includes two surfaces along a thickness direction thereof, and the plurality of second separation layers 132 are located on a same surface of the first separation layer 131.

An extremely large distance between the positive electrode plate 11 and the negative electrode plate 12 may affect a lithium intercalation process, resulting in aggravated lithium precipitation. The plurality of second separation layers 132 are arranged on a same surface of the first separation layer 131, so that the second separation layer 132 can less affect the distance between the positive electrode plate 11 and the negative electrode plate 12 when the first separation layer 131 is tensioned, thereby reducing the risk of lithium precipitation and improving the safety.

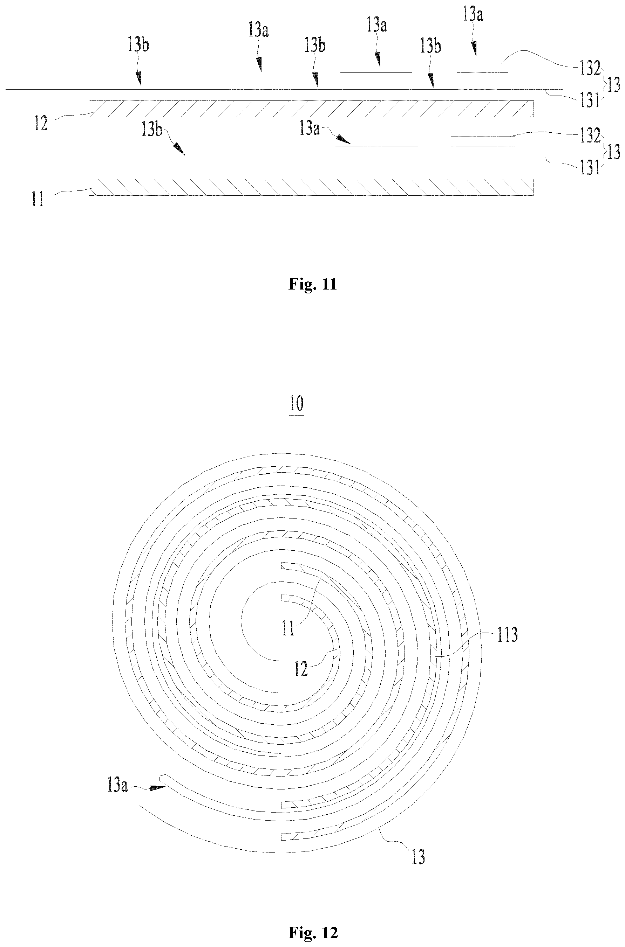

Fig. 11 is a schematic structural diagram of an electrode assembly prior to winding according to some other embodiments of the present application.

As shown in Fig. 11, in some embodiments, numbers of layers of the plurality of multi-layer structure areas 13a gradually decrease from inside out along the winding direction W.

In this embodiment, along the winding direction W, the number of layers of the innermost multi-layer structure area 13a is greater than the number of layers of the outermost multi-layer structure area 13a. The numbers of layers of two adjacent multi-layer structure areas 13a may be the same or different.

Along the winding direction W, curvature of the plurality of bending portions of the positive electrode plate 11 from inside out gradually decreases, and the risk of contact with the lithium dendrites also gradually decreases. In this embodiment, increasing the number of layers in the multi-layer structure area 13a in a region with a high short-circuiting risk and reducing the number of layers in the multi-layer structure area 13a in a region with a low short-circuiting risk can improve the safety and save the amount of the separation assembly 13.

Fig. 12 is a schematic structural diagram of an electrode assembly according to some other embodiments of the present application.

As shown in Fig. 12, at least part of the multi-layer structure area 13a is disposed adjacently to a final bending portion 113 of the positive electrode plate 11.

The electrode assembly 10 expands and extrudes the case 21 during the charging, and the case 21 may exert a reactive force on the electrode assembly 10. A region of the negative electrode plate 12 opposite to the final bending portion 113 of the positive electrode plate 11 is prone to lithium precipitation under the reactive force. In this embodiment, at least part of the multi-layer structure area 13a is disposed adjacently to the final bending portion 113 of the positive electrode plate 11, so as to reduce a risk of conduction between the final bending portion 113 of the positive electrode plate 11 and the lithium dendrites and improve the safety of the battery cell 6.

Exemplarily, the electrode assembly 10 is in a shape of a cylinder. Each bending portion of the positive electrode plate 11 refers to a circle of the positive electrode plate.

According to some embodiments of the present application, the present application further provides a battery cell, including a housing and the electrode assembly according to any one of the above embodiments. The electrode assembly is accommodated in the housing.

According to some embodiments of the present application, the present application further provides a battery, including a plurality of battery cells according to any one of the above embodiments.

According to some embodiments of the present application, the present application further provides an electric apparatus, including the battery cell according to any one of the above embodiments. The battery cell is configured to provide electric energy for the electric apparatus. The electric apparatus may be any of the foregoing devices or systems using the battery cell.

According to some embodiments of the present application, as shown in Fig. 4 to Fig. 7, the present application provides an electrode assembly, including a positive electrode plate 11, a negative electrode plate 12, and a separation assembly 13. The separation assembly 13 is configured to separate the positive electrode plate 11 from the negative electrode plate 12. The separation assembly 13 includes a first separation layer 131 and a second separation layer 132, the first separation layer 131 is configured to insulate and separate the positive electrode plate 11 from the negative electrode plate 12, and at least part of the second separation layer 132 is located between the positive electrode plate 11 and the negative electrode plate 12 and stacked with the first separation layer 131. A region of the first separation layer 131 overlapping with the second separation layer 132 and the second separation layer 132 form the multi-layer structure area 13a of the separation assembly 13. A region of the first separation layer 131 not overlapping with the second separation layer 132 forms the single-layer structure area 13b of the separation assembly 13. The second separation layer 132 is formed by folding an end portion of the first separation layer 131.

The positive electrode plate 11, the separation assembly 13, and the negative electrode plate 12 are wound to form a bending region B and a flat region A, the flat region A is connected to the bending region B, at least part of the multi-layer structure area 13a is disposed in the bending region B, and at least part of the single-layer structure area 13b is disposed in the flat region A. One part of the multi-layer structure area 13a is disposed adjacently to the first bending portion 111 of the positive electrode plate 11, and the other part of the multi-layer structure area 13a is disposed adjacently to the second bending portion 112 of the positive electrode plate 11.

The present application is further described below in conjunction with embodiments.

In order to make the objectives, the technical solutions, and the beneficial technical effects of the present application clearer, the present application will be described in further detail below with reference to embodiments. However, it is to be understood that the embodiments of the present application are intended to explain the present application but not to limit the present application, and the embodiments of the present application are not limited to the embodiments set forth in the specification. In embodiments in which specific experimental conditions or operating conditions are not specified, manufacturing is carried out according to conventional conditions or according to conditions recommended by a material supplier.

In Embodiment 1, manufacturing may be carried out according to the following steps.
(i) A positive active material LiNi_{0.8}Co_{0.1}Mn_{0.1}O₂, a conductive agent acetylene black, and a binder PVDF are mixed with a mass ratio of 96: 2: 2 and added to a solvent of N-methylpyrrolidone (NMP), which are stirred by a vacuum mixer until the system becomes homogeneous to obtain a positive slurry. The positive slurry is applied evenly to aluminum foil, and is transferred to an oven for continuous drying after being dried at room temperature. Then, a positive electrode plate is obtained after cold pressing, cutting, and slicing.
(ii) A negative active material graphite, a conductive agent acetylene black, a thickener carboxymethyl cellulose (CMC), and a binder styrene butadiene rubber (SBR) are mixed with a mass ratio of 96.4: 1: 1.2: 1.4 and added to solvent deionized water, which are stirred by a vacuum mixer until the system becomes homogeneous to obtain a negative slurry. The negative slurry is applied evenly to aluminum foil, and is transferred to an oven for continuous drying after being dried at room temperature. Then, a negative electrode plate is obtained after cold pressing, cutting, and slicing.
(iii) Ethylene carbonate (EC), ethyl methyl carbonate (EMC), and diethyl carbonate (DEC) are mixed with a volume ratio of 1: 1: 1 to obtain an organic solvent, and then fully dried lithium salt LiPF₆ is dissolved in the organic solvent after the mixing to formulate an electrolytic solution with concentration of 1 mol/L.
(iv) A PE film with a thickness of 7 µm is folded to form a separation assembly. The separation assembly includes a first separation layer and a second separation layer, and a length of the second separation layer is 652.5 mm.
(v) The positive electrode plate, the separation assembly, and the negative electrode plate are stacked together and wound into multiple circles, and then flattened into a flat shape after the winding to manufacture an electrode assembly.
(vi) The electrode assembly is put into a square case, and the case and an end cover are welded. Then a battery cell is obtained after procedures such as liquid injection, standing, formation, and shaping. Exemplarily, a capacity of the battery cell is 60 Ah.

In step (v), a gap between the innermost circle of the positive electrode plate and the innermost circle of the negative electrode plate is artificially made 200 µm to accelerate lithium precipitation of the electrode assembly. In the electrode assembly formed by winding, a first separation layer and a second separation layer are arranged between the innermost circle of the positive electrode plate and the innermost circle of the negative electrode plate.

### Embodiment 2

Refer to Embodiment 1 for a method for manufacturing a battery cell in Embodiment 2. A difference lies in that, in step (vi), gaps between two innermost circles of the positive electrode plate and two innermost circles of the negative electrode plate are artificially made 200 µm, a length of the second separation layer is 873.6 mm, and a first separation layer and a second separation layer are also arranged between the second circle of the positive electrode plate and the second circle of the negative electrode plate.

### Comparative Example 1

Refer to Embodiment 1 for a method for manufacturing a battery cell in Comparative Example 1. A difference lies in that the separation assembly in Comparative Example 1 is not folded and the separation assembly has a single-layer structure.

### Comparative Example 2

Refer to Embodiment 2 for a method for manufacturing a battery cell in Comparative Example 2. A difference lies in that the separation assembly in Comparative Example 2 is not folded and the separation assembly has a single-layer structure.

In Embodiment 1, Embodiment 2, Comparative Example 1, and Comparative Example 2, 80 battery cells are manufactured, and each battery cell is tested.

Specifically, under a room temperature environment, the battery cell is charged at a rate of 1 C, discharged at a rate of 1 C, and cyclically charged and discharged in a high SOC (e.g., 0.9 to 1) range.

40 battery cells in Embodiment 1 are fully charged after 500 cycles, and then left to stand for 24 hours to detect magnitude of the voltage drop of the battery cells, and self-discharge rates of the battery cells are calculated and then averaged. The self-discharge rate is voltage drop/time. The remaining 40 battery cells in Embodiment 1 are subjected to 2000 cycles, a number of battery cells failed during the cycles are recorded, and a failure rate is calculated.

In Embodiment 2, Comparative Example 1, and Comparative Example 2, testing is also carried out according to the above steps.

Evaluation results of Embodiments 1-2 and Comparative Examples 1-2 are shown in Table 1.

**Table 1**

| | Self-discharge rate | Failure rate |
|---|---|---|
| Embodiment 1 | 0.027 mV/h | 0% |
| Embodiment 2 | 0.053 mV/h | 2.5% |
| Comparative Example 1 | 0.71 mV/h | 92.5% |
| Comparative Example 2 | 0.89 mV/h | 95% |

With reference to Embodiments 1-2 and Comparative Examples 1-2, a multi-layer structure area is disposed between the positive electrode plate and the negative electrode plate, which can reduce the risk of short circuiting and prolong the service life of the battery cell during lithium precipitation on the negative electrode plate.

It is to be noted that the embodiments in the present application and the features in the embodiments can be combined with each other without a conflict.

Finally, it should be noted that the above embodiments are merely intended to describe the technical solutions of the present application instead of limiting the present application. Although the present application is described in detail with reference to the above embodiments, those of ordinary skill in the art should understand that they can still make modifications to the technical solutions described in the above embodiments, or make equivalent replacements to some or all of the technical features in the technical solutions. These modifications or replacements do not make the essence of corresponding technical solutions depart from the spirit and scope of the technical solutions of the embodiments of the present application.

## Claims

1. An electrode assembly, comprising a positive electrode plate, a negative electrode plate, and a separation assembly, the separation assembly being configured to separate the positive electrode plate from the negative electrode plate;
at least part of the separation assembly being provided as a multi-layer structure area, at least part of the multi-layer structure area being located between the positive electrode plate and the negative electrode plate adjacent to each other.

2. The electrode assembly according to claim 1, wherein the positive electrode plate, the separation assembly, and the negative electrode plate are wound to form a bending region, and at least part of the multi-layer structure area is disposed in the bending region.

3. The electrode assembly according to claim 2, wherein at least part of the multi-layer structure area is disposed adjacently to a first bending portion of the positive electrode plate.

4. The electrode assembly according to claim 3, wherein two sides of the first bending portion of the positive electrode plate are both provided with the multi-layer structure area, and a number of layers of the multi-layer structure area located on an inner side of the first bending portion of the positive electrode plate is greater than or equal to a number of layers of the multi-layer structure area located on an outer side of the first bending portion of the positive electrode plate.

5. The electrode assembly according to claim 3 or 4, wherein at least part of the multi-layer structure area is disposed adjacently to a second bending portion of the positive electrode plate.

6. The electrode assembly according to claim 5, wherein the number of layers of the multi-layer structure area located on the inner side of the first bending portion of the positive electrode plate is greater than or equal to a number of layers of the multi-layer structure area located on an inner side of the second bending portion of the positive electrode plate.

7. The electrode assembly according to any one of claims 2 to 6, wherein part of the separation assembly is provided as a single-layer structure area, and the single-layer structure area and the multi-layer structure area are arranged along a winding direction;
at least part of the single-layer structure area is located between the positive electrode plate and the negative electrode plate adjacent to each other.

8. The electrode assembly according to claim 7, wherein the positive electrode plate, the separation assembly, and the negative electrode plate are wound to further form a flat region, the flat region being connected to the bending region; and
at least part of the single-layer structure area is disposed in the flat region.

9. The electrode assembly according to claim 8, wherein an end portion of the multi-layer structure area along the winding direction is located in the flat region.

10. The electrode assembly according to claim 8 or 9, wherein a plurality of multi-layer structure areas and a plurality of single-layer structure areas are provided, the plurality of multi-layer structure areas and the plurality of single-layer structure areas being alternately arranged along the winding direction.

11. The electrode assembly according to claim 10, wherein numbers of layers of the plurality of multi-layer structure areas gradually decrease from inside to outside along the winding direction.

12. The electrode assembly according to claim 7, wherein in the winding direction, the multi-layer structure area is entirely located on a side of the single-layer structure area close to a winding starting end of the separation assembly.

13. The electrode assembly according to any one of claims 2 to 7, wherein at least part of the multi-layer structure area is disposed adjacently to a final bending portion of the positive electrode plate.

14. The electrode assembly according to any one of claims 1 to 11, wherein the separation assembly comprises a first separation layer and a second separation layer, the first separation layer being configured to insulate and separate the positive electrode plate from the negative electrode plate, at least part of the second separation layer being located between the positive electrode plate and the negative electrode plate and stacked with the first separation layer; and
a region of the first separation layer overlapping with the second separation layer and the second separation layer form the multi-layer structure area of the separation assembly.

15. The electrode assembly according to claim 14, wherein a number of layers of the second separation layer ranges from 1 to 10 in the multi-layer structure area.

16. The electrode assembly according to claim 14 or 15, wherein a thickness of the second separation layer is less than or equal to a thickness of the first separation layer.

17. The electrode assembly according to claim 16, wherein the thickness of the first separation layer ranges from 2 µm to 30 µm, and the thickness of the second separation layer ranges from 1 µm to 25 µm.

18. The electrode assembly according to any one of claims 14 to 17, wherein the first separation layer comprises a first base film and an insulating layer coated on a surface of the first base film, the second separation layer comprises a second base film, and a surface of the second base film is not coated with the insulating layer.

19. The electrode assembly according to claim 18, wherein a thickness of the second base film is greater than a thickness of the first base film.

20. The electrode assembly according to any one of claims 14 to 19, wherein at least part of the second separation layer is separated from the first separation layer in a stacking direction of the first separation layer and the second separation layer.

21. The electrode assembly according to claim 20, wherein the positive electrode plate, the separation assembly, and the negative electrode plate are wound to form a bending region and a flat region, the flat region being connected to the bending region;
one part of the second separation layer is located in the bending region, and the other part of the second separation layer is located in the flat region; and
in the bending region, the second separation layer is separated from the first separation layer; and in the flat region, the second separation layer is attached to the first separation layer.

22. The electrode assembly according to any one of claims 14 to 21, wherein porosity of the second separation layer is less than porosity of the first separation layer.

23. The electrode assembly according to any one of claims 14 to 22, wherein the second separation layer has a porous structure, and a pore size of a pore in the second separation layer is less than or equal to 1 µm.

24. The electrode assembly according to any one of claims 14 to 23, wherein an elongation rate of the second separation layer along the winding direction is greater than an elongation rate of the first separation layer along the winding direction.

25. The electrode assembly according to any one of claims 14 to 24, wherein the second separation layer is formed by folding an end portion of the first separation layer.

26. The electrode assembly according to claim 25, wherein the positive electrode plate, the separation assembly, and the negative electrode plate are wound, the electrode assembly comprises a starting segment along the winding direction, and the end portion of the first separation layer is located at the starting segment.

27. The electrode assembly according to claim 26, wherein the positive electrode plate, the separation assembly, and the negative electrode plate are wound to form a bending region, the bending region comprises a first bending part close to the starting segment along the winding direction, the first bending part is provided with the first separation layer and the second separation layer, and the second separation layer extends from the end portion of the first separation layer and beyond the first bending part.

28. The electrode assembly according to any one of claims 14 to 24, wherein the positive electrode plate, the separation assembly, and the negative electrode plate are wound to form a bending region; and
the bending region comprises a plurality of bending parts arranged along the winding direction, the electrode assembly comprises a plurality of second separation layers, and the first separation layer and the plurality of second separation layers are arranged at at least one of the plurality of bending parts.

29. The electrode assembly according to claim 28, wherein the plurality of second separation layers are arranged apart along the winding direction.

30. The electrode assembly according to claim 28 or 29, wherein the electrode assembly comprises a starting segment along the winding direction; and the plurality of bending parts comprise a first bending part and a second bending part, the first bending part being closer to the starting segment than the second bending part along the winding direction; and
the thickness of the second separation layer arranged at the first bending part is greater than the thickness of the second separation layer arranged at the second bending part.

31. The electrode assembly according to any one of claims 28 to 30, wherein the first separation layer comprises two surfaces along a thickness direction thereof, and the plurality of second separation layers are located on a same surface of the first separation layer.

32. The electrode assembly according to any one of claims 28 to 31, wherein the plurality of second separation layers are bonded to a surface of the first separation layer.

33. A battery cell, comprising a housing and the electrode assembly according to any one of claims 1 to 32, the electrode assembly being accommodated in the housing.

34. A battery, comprising a plurality of battery cells according to claim 33.

35. An electric apparatus, comprising the battery cell according to claim 33, the battery cell being configured to provide electric energy.
